# FASCICULE DE BREVET EUROPEEN

(11) **EP 2 959 553 B1**
(45) Date de publication et mention de la délivrance du brevet: **25.01.2017**
(21) Numéro de dépôt: 14707706.9
(22) Date de dépôt: 21.02.2014
(51) Int. Cl.: H02B 3/00, H02B 5/06, H02B 13/045, H02B 1/22

(54) **PROCEDE D'EXTRACTION D'UNE ENVELOPPE D'UN POSTE A ISOLATION GAZEUSE SOUS ENVELOPPE METALLIQUE (PSEM)**
VERFAHREN ZUM ENTFERNEN EINER KAPSELUNG EINER GASISOLIERTEN SCHALTANLAGE
METHOD OF WITHDRAWAL OF AN ENCLOSURE OF A GAS INSULATED SWITCHGEAR

(30) Priorité: 25.02.2013 FR 1351636
(43) Date de publication de la demande: 30.12.2015
(73) Titulaire: General Electric Technology GmbH, 5400 Baden (CH)
(72) Inventeur: GERBER, Heinz, CH-5035 Unterentfelden (CH); LÜSCHER, Robert, CH-5703 Seon (CH)
(74) Mandataire: Brevalex
(86) Numéro de dépôt international: PCT/EP2014/053407
(87) Numéro de publication internationale: WO 2014/128251

(56) Documents cités:
- EP-A1- 0 593 344
- CH-A- 558 093
- DE-B1- 1 515 367
- US-B1- 6 399 911
- US-B2- 6 759 616

## Description

### DOMAINE TECHNIQUE

L'invention porte sur la maintenance et la réparation de postes électriques à haute ou moyenne tension sous enveloppe métallique à isolation gazeuse (PSEM) communément appelés GIS (Gas-Insulated Substations). Les postes de ce type comportent des appareillages, en particulier des sectionneurs de barre, disjoncteurs ou des sectionneurs de mise à la terre. Les appareillages sont généralement isolés à l'hexafluorure de soufre (SF₆) dans des cuves sous pression, à une pression de service de 0,4 à 0,8 MPa, par exemple 0,7 MPa.

Les PSEM peuvent être subdivisés en équipements monophasés et triphasés. Dans les équipements triphasés, les trois conducteurs de phases sont confinés dans une même cuve. Dans les équipements monophasés, une cuve accueille une phase seulement.

D'un point de vue technique, la présente invention s'applique aux équipements monophasés aussi bien qu'aux équipements triphasés.

Elle a par ailleurs trait à la santé et à la sécurité au travail (en anglais *OHS* ou *Occupational Health and Safety).*

Un exemple de PSEM comporte une pluralité de disjoncteurs, un ou plusieurs jeu(x) de barres et un sectionneur par jeu de barres. Le ou les jeu(x) de barres (en anglais *busbar(s)*) connecte (nt) les disjoncteurs entre eux. Un sectionneur respectif est intercalé entre chaque jeu de barres et chaque disjoncteur. Une subdivision du PSEM appelée une travée (en anglais *bay)* regroupe un disjoncteur, une portion de chaque jeu de barres correspondant, les sectionneurs intercalés et une enveloppe d'espacement pour chacun sectionneurs.

### ÉTAT DE LA TECHNIQUE ANTÉRIEURE

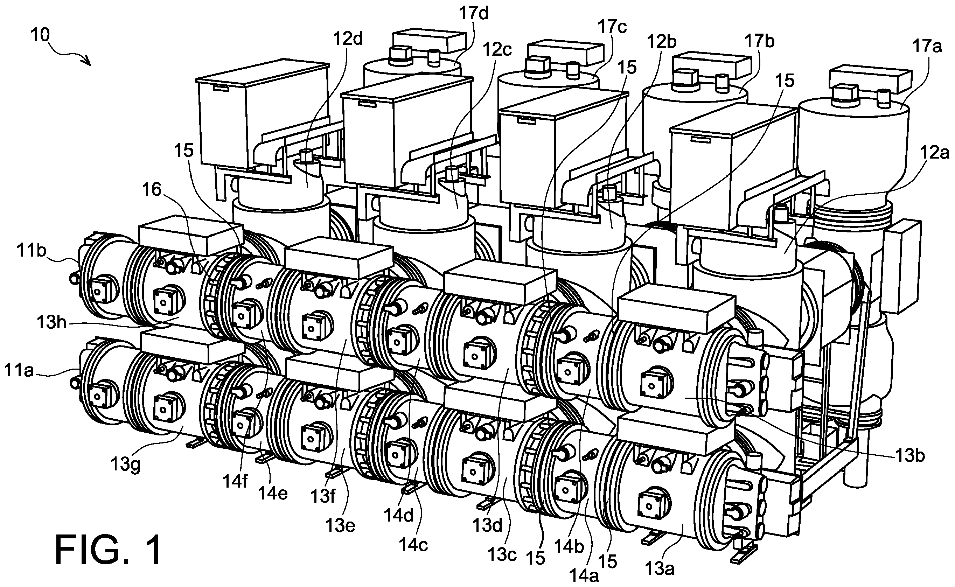

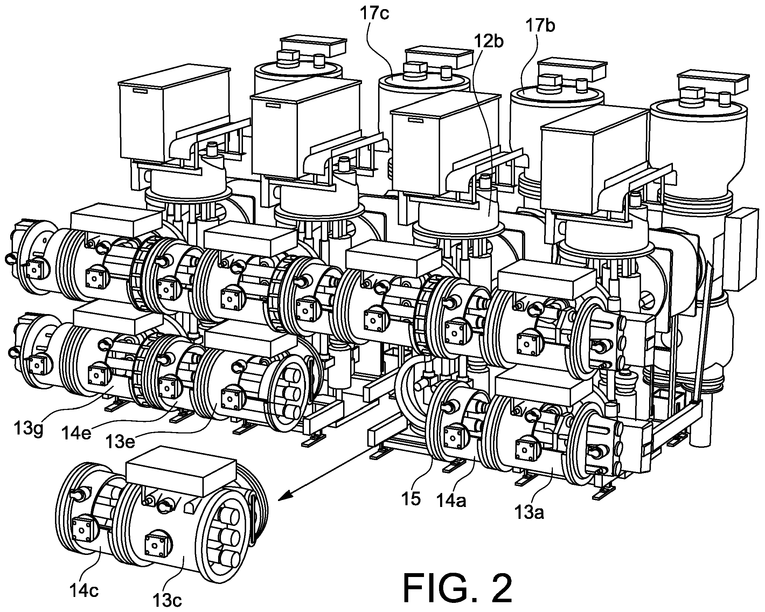

De manière plus détaillée, le PSEM 10 visible en figures 1 et 2 comporte deux jeux de barres 11a et 11b, quatre enveloppes à disjoncteur 12a à 12d (correspondant chacun à une travée 17a à 17d), huit enveloppes à sectionneur 13a à 13h et six enveloppes d'espacement 14a à 14f.

Les enveloppes 12a à 12d, 13a à 13h et 14a à 14f sont des cuves métalliques remplies de gaz isolant sous pression. Des isolants supports 15, étanches aux gaz, situés à chaque interface entre les enveloppes 13a à 13h et les enveloppes 12a à 12d ou 14a à 14f, empêchent tout échange de gaz SF₆ entre enveloppes adjacentes. C'est-à-dire que chacune des enveloppes 12a à 12d, 13a à 13h et 14a à 14f forme une unité sous pression indépendante.

Les jeux de barres 11a et 11b comportent ici chacun trois conducteurs, qui sont les barres à proprement parler. Ces barres s'étendent chacune sur toute la largeur du PSEM 10, dans les enveloppes à sectionneur et les enveloppes d'espacement.

Les enveloppes 12a à 12d permettent d'isoler chacune leur travée 17a à 17d du réseau aval.

En figure 1, deux enveloppes à sectionneur 13a et 13b forment chacun l'interface entre l'enveloppe 12a et respectivement un jeu de barres 11a ou 11b. Chaque autre enveloppe 12b à 12d est connectée de même à deux enveloppes à sectionneur parmi 13c à 13h. Les enveloppes à sectionneur 13a à 13h permettent d'isoler électriquement une enveloppe à disjoncteur 12a à 12d de l'un ou l'autre des jeux de barres 11a et 11b.

Chaque enveloppe à sectionneur 13a à 13h est séparée de l'enveloppe à sectionneur voisine par une enveloppe d'espacement 14a à 14f. Par exemple, l'enveloppe 13a est séparée de l'enveloppe 13c voisine par l'enveloppe d'espacement 14a.

A proprement parler, les enveloppes 14a à 14f sont optionnelles, c'est-à-dire qu'un PSEM pourrait fonctionner avec les enveloppes 13a et 13c fixés l'une sur l'autre. Cependant, ces enveloppes 14a à 14f intermédiaires sont utilisées pour faciliter l'accès aux travées.

Sur l'une seule de ses deux interfaces avec une enveloppe d'espacement adjacente 14a à 14f, chaque enveloppe 13c à 13h comporte un ensemble de couplage démontable 16. Cet ensemble de couplage 16 est par exemple fait d'une pluralité de vis. Les enveloppes 13a et 13b sont en extrémité de jeu de barres et n'en comportent pas.

Pour intervenir sur un sectionneur, il est nécessaire d'isoler son enveloppe du jeu de barres.

Par exemple, à la figure 2, l'enveloppe 13c a été extraite de la travée 17b. L'interface entre les enveloppes 13c et 14c n'est pas démontable et ces deux éléments ont été extraits en un bloc.

On note que lorsque l'enveloppe 13c est démontée, l'isolant support 15 séparant l'enveloppe 13c d'avec l'enveloppe à disjoncteur 12b reste attachée à l'enveloppe 13c. Puisque l'isolation gazeuse n'est plus assurée, le courant doit être interrompu dans la travée 17b au préalable.

De même, l'isolant support 15 séparant l'enveloppe d'espacement 14c d'avec l'enveloppe à sectionneur 13e reste attachée à 14c après démontage. On note alors que l'enveloppe à sectionneur 13e doit être, avant démontage, remplie d'air à pression atmosphérique. Le courant doit donc être également désactivé dans la travée 17c concerné.

Enfin, l'isolant 15 séparant l'enveloppe 13c d'avec l'enveloppe d'espacement 14a reste attachée à 14a, qui reste sur le PSEM 10.

Pour démonter l'enveloppe à sectionneur 13c du PSEM, on procède donc de la façon suivante :
- on met à la terre les travées 17b et 17c et le jeu de barres 11a,
- on vide l'enveloppe à disjoncteur 12b, les enveloppes à sectionneur 13c et 13e ainsi que l'enveloppe 14c intermédiaire de leur gaz isolant qu'on remplace par de l'air à pression atmosphérique,
- on abaisse la pression interne des enveloppes 14a et 14e à une pression intermédiaire pour limiter le différentiel de pression de part et d'autre des isolants supports 15 désormais exposés à la pression ambiante, et,
- après avoir désengagé l'ensemble de couplage 16 entre les enveloppes 14a et 13c et entre les enveloppes 14c et 13e, on procède à l'extraction physique des enveloppes 13c et 14c.

Cette structure de PSEM requiert donc la mise hors service de deux travées adjacentes en cas de défaillance d'un sectionneur.

Or, pour chaque mise hors service d'une travée, la distribution de courant en aval risque d'être interrompue.

En outre, toute vidange du gaz isolant d'une enveloppe et tout démontage nécessite du temps.

Enfin, le SF₆ est un puissant gaz à effet de serre et toute manipulation de SF₆ que l'on peut s'épargner limite d'autant le risque de fuite.

Le brevet CH 558 093 décrit un procédé d'extraction d'une enveloppe à sectionneur d'une travée d'un PSEM, la travée présentant encore une première enveloppe d'espacement adjacente à l'enveloppe sectionneur. Aucune précaution particulière pour assurer la stabilité de l'isolant séparant l'enveloppe d'espacement à pression atmosphérique à celle du sectionneur de la travée adjacente sous pression de service n'est mentionnée.

Le brevet US 6,759,616 décrit une travée d'appareillage électrique à isolation gazeuse.

Cette travée comporte un disjoncteur, un premier sectionneur côté charge dans une cuve, un deuxième et un troisième sectionneur côtés bus dans une autre cuve. Une première traversée isolée relie le premier sectionneur à la charge, une deuxième et une troisième traversées isolées relient le deuxième et le troisième sectionneur à un bus respectif. Des isolants étanches aux gaz séparent successivement la première traversée isolée, le sectionneur côté charge, le disjoncteur et les sectionneurs côté bus. D'autres isolants de même type relient les sectionneurs côté bus à une traversée isolée respective côté bus.

Néanmoins, ce brevet ne divulgue pas de jeu de barres isolé au gaz.

En outre, et contrairement au problème technique que prétend résoudre ce brevet US 6,759,616, les appareillages qu'ils divulguent ne permettraient pas d'effectuer la maintenance sans déconnecter les bus. Par exemple, à la figure 16 du brevet US 6,759,616, plusieurs conducteurs métalliques, dont ceux connectés aux bus, plongent dans la même enveloppe centrale à isolation gazeuse. En abaissant la pression de cette enveloppe, après fermeture du sectionneur de charge, l'isolation gazeuse ne serait plus assurée, produisant un arc électrique depuis les bus.

La présente invention a pour objet d'améliorer la maintenance et la réparation d'un sectionneur hors d'usage par rapport aux dispositifs existants.

### EXPOSÉ DE L'INVENTION

Il est proposé ici un stabilisateur amovible pour une enveloppe d'espacement d'une installation électrique de type PSEM, ce stabilisateur amovible étant configuré pour être fixé mécaniquement à un conducteur dans ladite enveloppe d'espacement afin de bloquer ledit conducteur en translation après mise à pression atmosphérique de ladite enveloppe d'espacement.

Un tel stabilisateur permet d'intervenir sur l'installation électrique de façon particulièrement sûre et simple en solidarisant le conducteur à son enveloppe d'espacement. Le conducteur, l'enveloppe d'espacement et le stabilisateur admettent alors une position de maintenance sûre dans laquelle le stabilisateur est solidaire du conducteur et de l'enveloppe d'espacement.

Selon une réalisation avantageuse, l'enveloppe d'espacement comporte une première ouverture ainsi qu'un conducteur pourvu d'un alésage, le stabilisateur amovible comprend une fiche configurée pour être introduite par la première ouverture dans l'enveloppe d'espacement, la fiche étant destinée à pénétrer dans l'alésage du conducteur. Selon une réalisation avantageuse supplémentaire, le stabilisateur amovible comprend une douille configurée pour être introduite par une deuxième ouverture dans l'enveloppe d'espacement et pour recevoir une extrémité de la fiche.

Avantageusement, la fiche et la douille sont configurées pour être vissées respectivement à la première ouverture et à la deuxième ouverture.

En variante, la fiche est configurée pour être vissée sur la douille.

Selon une autre réalisation avantageuse, une extrémité de la fiche est configurée pour être disposée dans un logement que comporte l'enveloppe d'espacement, le logement étant situé en vis-à-vis de la première ouverture.

Avantageusement, la fiche est configurée pour être vissée à la première ouverture.

En variante, la fiche est configurée pour être vissée dans ledit logement.

La fiche peut être disposée à travers la première ouverture et comporter une tête de diamètre au moins égal au diamètre de la première ouverture.

La fiche peut comporter un corps dont au moins une portion d'extrémité est de diamètre inférieur ou égal au diamètre de l'alésage et peut ainsi être disposée dans l'alésage du conducteur.

Lorsque le stabilisateur comporte une douille, celle-ci peut être disposée à travers la deuxième ouverture et comporter une tête de diamètre au moins égal au diamètre de la deuxième ouverture.

La douille peut comporter un logement dans lequel l'extrémité de la fiche peut être disposée.

Lorsque la fiche est configurée pour être vissée à la première ouverture, la fiche peut comporter un filetage sur sa tête ou sur son corps. Un tel filetage peut coopérer avec un filetage correspondant de l'enveloppe d'espacement dont celle-ci est par exemple pourvue sur le pourtour de la première ouverture.

La douille peut comporter un filetage sur sa tête ou sur l'extérieur de son corps. Un tel filetage peut coopérer avec un filetage correspondant de l'enveloppe d'espacement, situé par exemple sur le pourtour de la deuxième ouverture.

Lorsque la fiche est configurée pour être vissée sur la douille, une surface intérieure du logement de la douille peut être pourvue d'un filetage coopérant avec un filetage correspondant de l'extrémité de la fiche.

L'extrémité de la fiche peut être de diamètre inférieur ou égal au diamètre du logement que comporte l'enveloppe d'espacement sur sa paroi, en regard de la première extrémité.

Lorsque la fiche est configurée pour être vissée dans le logement que comporte l'enveloppe d'espacement, la fiche comporte un filetage sur son extrémité et l'enveloppe d'espacement comporte un filetage correspondant dans le logement.L'invention porte également sur une enveloppe d'espacement comportant au moins un premier conducteur, au moins un stabilisateur amovible tel que décrit ci-dessus et au moins une première ouverture pour introduire la fiche dudit stabilisateur amovible.

Ledit premier conducteur peut comporter un alésage pour recevoir ledit stabilisateur amovible.

Une telle enveloppe d'espacement peut comporter au moins un deuxième conducteur et un organe de liaison reliant mécaniquement lesdits conducteurs entre eux, le stabilisateur amovible coopérant avec l'organe de liaison pour que tous lesdits conducteurs puissent être bloqués en translation par rapport à l'enveloppe d'espacement après mise à pression atmosphérique de l'enveloppe d'espacement.

L'organe de liaison peut comporter des moyens externes à l'enveloppe d'espacement, par exemple un flasque.

En variante, l'organe de liaison peut former une partie de la paroi de l'enveloppe d'espacement, celle-ci comportant au moins une ouverture auxiliaire, une tige stabilisatrice étant logée dans l'ouverture auxiliaire et dans un alésage que comporte le deuxième conducteur, lorsque l'enveloppe d'espacement se trouve dans sa position de maintenance.

L'organe de liaison peut encore être une bride fixée aux deux conducteurs, par exemple rivetée, dans l'enveloppe d'espacement.

L'invention porte également sur un procédé d'extraction d'une enveloppe à sectionneur d'une travée d'installation électrique de type PSEM, ladite travée présentant une enveloppe à disjoncteur reliant l'installation électrique à un réseau de distribution, la travée présentant encore une première enveloppe d'espacement adjacente à l'enveloppe à sectionneur, l'installation électrique comportant un jeu de barres, l'enveloppe à sectionneur et l'enveloppe d'espacement étant chacune traversée par une portion respective du jeu de barres, l'enveloppe à sectionneur, l'enveloppe à disjoncteur et l'enveloppe d'espacement formant, lorsqu'elles sont remplies de gaz isolant à une pression de service déterminée, chacune une unité sous pression indépendante, la méthode comportant les étapes suivantes :
- mise à la terre de ladite travée et dudit jeu de barres,
- remplacement du gaz isolant à la pression de service dans l'enveloppe à disjoncteur, ladite enveloppe à sectionneur et ladite première enveloppe d'espacement par de l'air à pression atmosphérique,
- mise en place, dans la première enveloppe d'espacement, d'un stabilisateur amovible tel que décrit ci-dessus,
- extraction physique de l'enveloppe à sectionneur hors du PSEM.

Un premier élément isolant peut être disposé entre l'enveloppe à sectionneur et l'enveloppe à disjoncteur et un deuxième élément isolant entre l'enveloppe à sectionneur et la première enveloppe d'espacement, ces isolants étant maintenus sur l'enveloppe à sectionneur après extraction.

L'installation électrique peut en outre comporter une deuxième enveloppe d'espacement adjacente à ladite enveloppe à sectionneur, comportant une étape d'abaissement de la pression interne de la deuxième enveloppe d'espacement à un niveau de pression inférieur à la pression de service, l'étape d'abaissement intervenant avant l'extraction physique de l'enveloppe à sectionneur mais après la mise à la terre dudit jeu de barres.

L'enveloppe à sectionneur peut être alors séparée de la deuxième enveloppe d'espacement par un troisième isolant support. Celui-ci peut rester attaché à la deuxième enveloppe d'espacement après extraction physique de l'enveloppe à sectionneur hors du PSEM.

La pression interne de la deuxième enveloppe d'espacement, après abaissement, est par exemple comprise entre 0,1MPa et 0,5MPa, par exemple encore voisine de 0,2MPa.

Dans une variante, la pression interne de la deuxième enveloppe d'espacement après abaissement est la pression atmosphérique et l'isolant support reste attaché à l'enveloppe à sectionneur après son extraction physique.

On peut alors mettre en place d'un stabilisateur amovible sur la deuxième enveloppe d'espacement.

En variante encore, la pression interne de la deuxième enveloppe d'espacement, après abaissement, est égale à la pression atmosphérique, et on met en oeuvre une étape de mise en place d'un stabilisateur amovible sur la deuxième enveloppe d'espacement.

L'invention présente l'avantage de limiter le nombre de travées à désactiver lors des interventions de maintenance. On limite ainsi de façon avantageuse le nombre d'interruptions dans les réseaux de distribution d'électricité, assurant ainsi une qualité de service maximale.

L'invention porte encore sur un PSEM comportant un stabilisateur et/ou une enveloppe tels que décrits ci-dessus, et/ou dans lequel le procédé d'extraction décrit ci-dessus peut être mis en oeuvre.

### BRÈVE DESCRIPTION DES DESSINS

On décrira à présent, à titre d'exemples non limitatifs, des modes de réalisation de l'invention, en se référant aux dessins annexés, dans lesquels :
- la figure 1 est une vue en perspective d'un PSEM existant ayant des jeux de barres, des enveloppes à disjoncteur, des enveloppes à sectionneur et des enveloppes d'espacement, les enveloppes à sectionneur reliant les jeux de barres aux enveloppes à disjoncteur, les enveloppes d'espacement reliant les enveloppes à sectionneur deux à deux,
- la figure 2 montre, avec arrachements partiels pour illustrer la disposition des conducteurs de phase dans les enveloppes, le PSEM de la figure 1 duquel a été extrait une enveloppe à sectionneur et son enveloppe d'espacement associée,
- la figure 3 est une vue en perspective d'un PSEM modifié, ayant des jeux de barres, des enveloppes à disjoncteur, des enveloppes à sectionneur et des enveloppes d'espacement, les enveloppes à sectionneur reliant les jeux de barres aux enveloppes à disjoncteur, les enveloppes d'espacement reliant les enveloppes à sectionneur deux à deux, chaque enveloppe d'espacement comportant deux ensembles de couplage,
- la figure 4 est une vue en perspective avec arrachements partiels de deux enveloppes à sectionneur et d'une enveloppe d'espacement de la figure 3, l'enveloppe d'espacement étant pourvue d'une bride et d'un stabilisateur amovible,
- la figure 5 est la vue de la figure 4 montrant le stabilisateur désassemblé,
- la figure 6 montre une enveloppe à sectionneur démontée avec deux isolants supports,
- la figure 7 montre une enveloppe à sectionneur démontée similaire à celle de la figure 6, avec un troisième isolant support, et,
- la figure 8a est une vue schématique d'une coupe transversale de l'enveloppe d'espacement de la figure 4 suivant les repères VIII, et,
- la figure 8b est une vue similaire à la figure 8a d'une variante de l'enveloppe d'espacement et du stabilisateur,
- la figure 8c une autre vue similaire à la figure 8a d'une variante de l'enveloppe d'espacement et du stabilisateur,
- la figure 9 est un autre mode de réalisation de l'enveloppe d'espacement.

### EXPOSÉ DÉTAILLÉ DE MODES DE RÉALISATION PARTICULIERS

Le PSEM 10 visible en figures 1 et 2 est pour rappel décrit dans la partie introductive de cette demande.

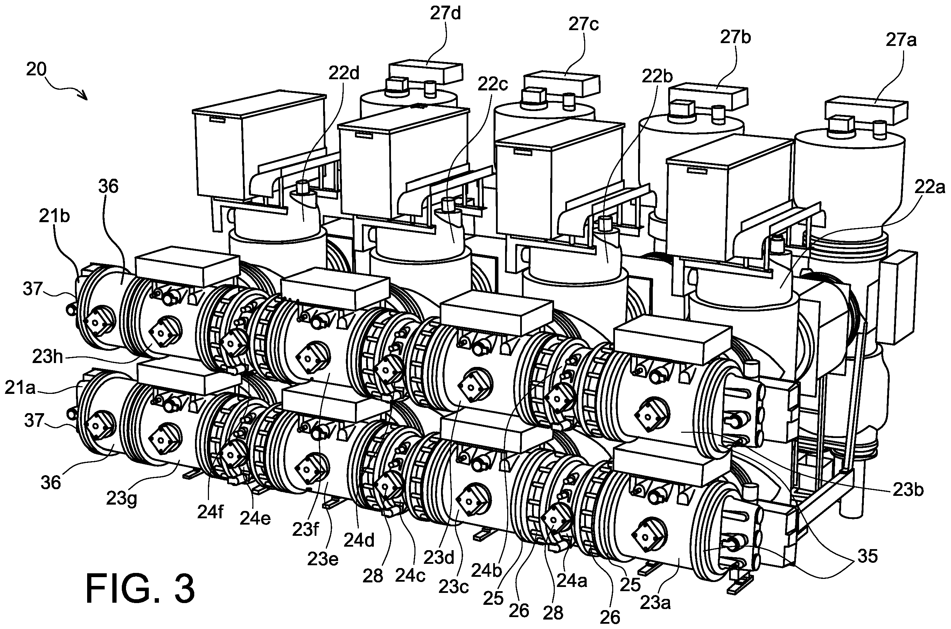

La figure 3 illustre un PSEM 20 modifié par rapport au PSEM 10.

Le PSEM 20 présente deux jeux de barres 21a et 21b, quatre enveloppes à disjoncteur 22a à 22d correspondant à quatre travées 27a à 27d, huit enveloppes à sectionneur 23a à 23h et six enveloppes d'espacement 24a à 24f.

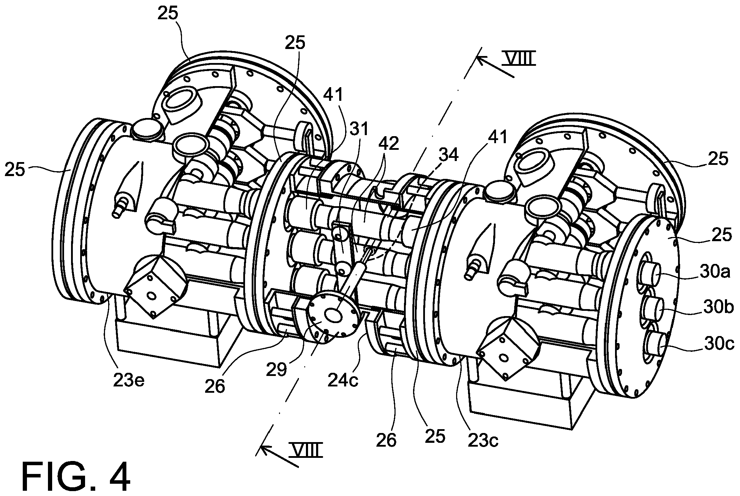

Un stabilisateur 29 amovible adapté au PSEM 20 est prévu (voir figures 4, 5 et 8a). Le stabilisateur 29 comporte une fiche 29a et une douille 29b. Le stabilisateur 29 est aussi pourvu de deux têtes 32. Sa fonction sera décrite plus loin.

Les enveloppes 22a à 22d, 23a à 23h et 24a à 24f sont des cuves métalliques remplies de gaz isolant sous pression. Des isolants supports 25, étanches aux gaz, situés à chaque interface entre les enveloppes 23a à 23h et les enveloppes 22a à 22d ou 24a à 24f, empêchent tout échange de gaz SF₆ entre enveloppes adjacentes. Chacune des enveloppes 22a à 22d, 23a à 23h et 24a à 24f forme une unité sous pression indépendante.

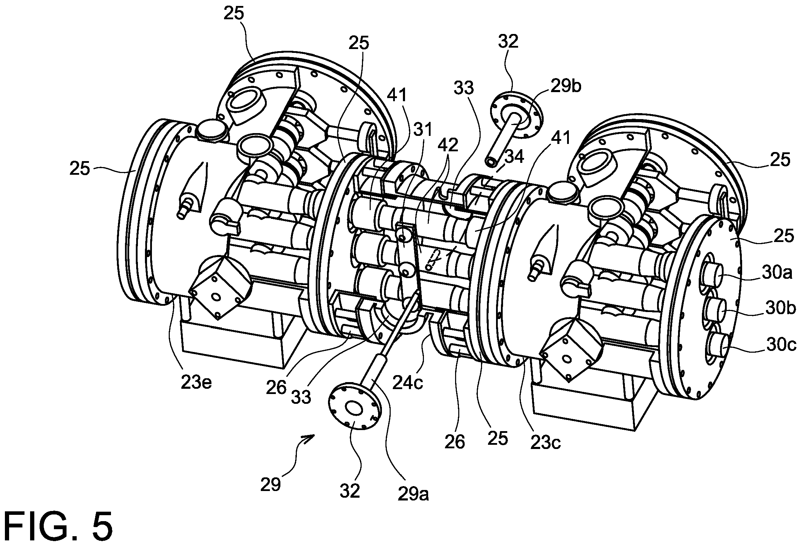

Les jeux de barres 21a et 21b comportent ici chacun trois conducteurs 30a, 30b et 30c, qui sont les barres à proprement parler (voir figures 4 et 5). Ces barres s'étendent chacune sur toute la largeur du PSEM 20, dans les enveloppes à sectionneur et les enveloppes d'espacement. Les barres sont ici orientées de manière sensiblement horizontale. Chaque enveloppe 23a à 23h et 24a à 24f recouvre une portion respective de jeu de barres et en permet l'isolation gazeuse.

Sur leur longueur, les jeux de barres 21a et 21b comportent en combinaison des manchons conducteurs 41 et des tiges 42, formant respectivement les conducteurs 30a à 30c. Trois manchons 41 sont montés sur chaque isolant support 25, permettant une connexion électrique d'un côté à l'autre de chaque isolant 25. Les tiges 42 sont quant à elles fichées dans les manchons 41 et maintenues en position entre deux isolants supports 25 successifs, par exemple de part et d'autre de l'enveloppe 24c en figures 4 et 5.

Pour chaque jeu de barres, chaque tige 42 du conducteur 30b située dans l'une des enveloppes d'espacement 24a à 24f comporte un alésage 34.

Les enveloppes à disjoncteur 22a à 22d permettent chacune d'isoler leur travée 27a à 27d du réseau aval.

Les enveloppes à sectionneur 23c à 23h diffèrent des enveloppes 13c à 13h décrites en préambule en ce qu'elles sont exemptes d'ensemble de couplage 16. Les enveloppes 23a et 23b, en bout de jeux de barres en sont exemptes également.

Les deux enveloppes à sectionneur 23a et 23b forment chacune l'interface entre l'enveloppe 22a et respectivement un jeu de barres 21a ou 21b. Chaque autre enveloppe 22b à 22d est reliée de même à deux enveloppes à sectionneur.

Les enveloppes à sectionneur 23a à 23h permettent d'isoler électriquement une enveloppe à disjoncteur 22a à 22d de l'un ou l'autre des jeux de barres 21a et 21b.

Les enveloppes d'espacement 24a à 24f relient les enveloppes à sectionneur 23a à 23h deux à deux tel que représenté en figure 3. Pour cela, les enveloppes 24a à 24f comportent chacune deux ensembles de couplage 26. Par exemple, l'enveloppe 23a est reliée à l'enveloppe 23c voisine par l'enveloppe d'espacement 24a. Cette dernière comporte un ensemble de couplage 26 pour assurer une liaison avec l'enveloppe 23a et un autre ensemble de couplage 26 pour assurer une liaison avec l'enveloppe 23c.

Les enveloppes d'espacement 24a à 24f comportent chacune deux ouvertures 33 opposées, comme illustrées à la figure 5. Chaque ouverture 33 est en regard de l'alésage 34. En service, ces ouvertures 33 sont obturées ; ici par un dispositif de contrôle de pression 28 (visible en figure 3), ou un capuchon étanche aux gaz (non illustré). Une ouverture 33 peut aussi servir à introduire un dispositif de mesure de champ électrique, ou d'autres outillages ou appareils de mesure.

Les enveloppes d'espacement 24a à 24f comportent chacune une bride 31 installée à demeure. Celle-ci est ici une lame en matériau isolant, rivetée à chacun des conducteurs 30a à 30c.

L'ensemble de couplage 26 est du même type que l'ensemble de couplage 16, par exemple fait d'une pluralité de vis, si ce n'est qu'il est porté par les enveloppes d'espacement.

Les travées 27a à 27d, comprennent chacune une enveloppe à disjoncteur, deux enveloppes à sectionneur, chacune correspondant à l'un des jeux de barres, une enveloppe d'espacement voisin pour chacune des enveloppes à sectionneur, et enfin les portions de chaque jeu de barres isolées dans les enveloppes de cette travée.

On décrit maintenant les étapes préalables à l'extraction de l'enveloppe à sectionneur 23c pour intervention sur le sectionneur.

Grâce aux ensembles de couplage 26, l'enveloppe 23c peut être extraite du PSEM 20 seule. C'est-à-dire qu'elle peut être détachée complètement des enveloppes d'espacement voisines, ici 24a et 24c.

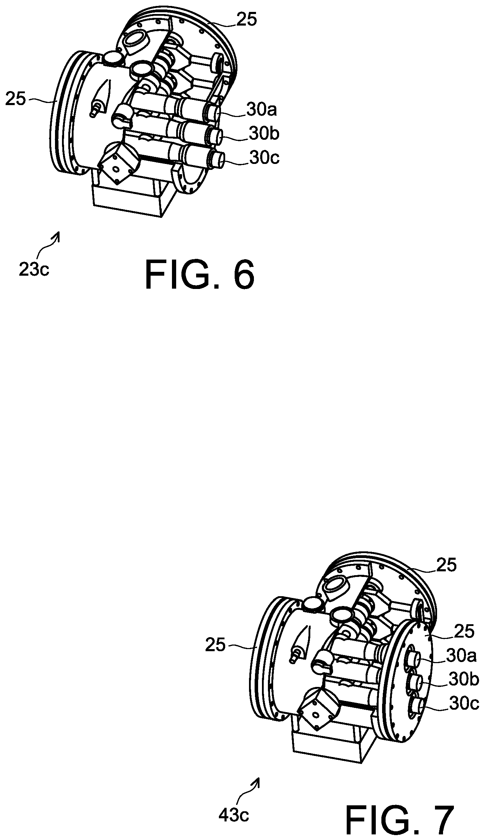

Les isolants supports 25 séparant l'enveloppe 23c d'avec l'enveloppe à disjoncteur 22b et d'avec l'enveloppe d'espacement 24c restent attachés à 23c après démontage. En revanche, l'isolant 25 la séparant d'avec l'enveloppe d'espacement 24a reste attaché à 24a. La figure 6 montre l'enveloppe 23c démontée tel que décrite ci-dessus, avec les deux isolants 25 restés attachés. Les isolants sont ici maintenus sur une enveloppe respective par des vis non représentées sur les figures.

Pour démonter l'enveloppe à sectionneur 23c du PSEM, on procède donc de la façon suivante :
- on met à la terre la travée 27b et le jeu de barres 21a,
- on vide l'enveloppe à disjoncteur 22b, l'enveloppe à sectionneur 23c et l'enveloppe d'espacement 24c de leur gaz isolant qu'on remplace par de l'air à pression atmosphérique,
- on abaisse la pression interne de l'enveloppe 24a à une pression intermédiaire pour limiter le différentiel de pression de part et d'autre de l'isolant support 25 désormais exposé à la pression ambiante,
- on met en place le stabilisateur 29 sur l'enveloppe d'espacement 24c comme décrit ci-après et comme illustré aux figures 4, 5 et 8a ; l'enveloppe d'espacement 24c se trouve alors dans une position de maintenance dans laquelle elle peut être désaccouplée et extraite de manière sûre, et,
- après avoir désengagé l'ensemble de couplage 26 adjacents à l'enveloppe 23c des enveloppes 24a et 24c, on procède à l'extraction physique de l'enveloppe 23c.

Dans les étapes qui précèdent, alors que l'enveloppe d'espacement 24c vient d'être remplie d'air à pression atmosphérique, l'enveloppe à sectionneur adjacente 23e reste remplie de SF6 à pression de service. L'isolant 25 séparant les enveloppes 24c et 23e est donc soumis sur l'une de ses faces à la pression de service, et sur l'autre, à la pression atmosphérique. Avec ce différentiel de pression important de part et d'autre, les chocs provoqués par l'extraction de l'enveloppe 23c risquent de faire éclater l'isolant 25 en blessant un opérateur tout en libérant le SF6 dans l'atmosphère.

Afin d'éviter ce genre d'incident, il est nécessaire de mettre en place, préalablement à l'extraction de l'enveloppe 23c, le stabilisateur 29 dans l'enveloppe d'espacement 24c. On parle de mise en place a posteriori ou bien en pré-démontage (en anglais *retrofitting*).

On libère les ouvertures 33 du dispositif de contrôle de pression 28 et du capuchon.

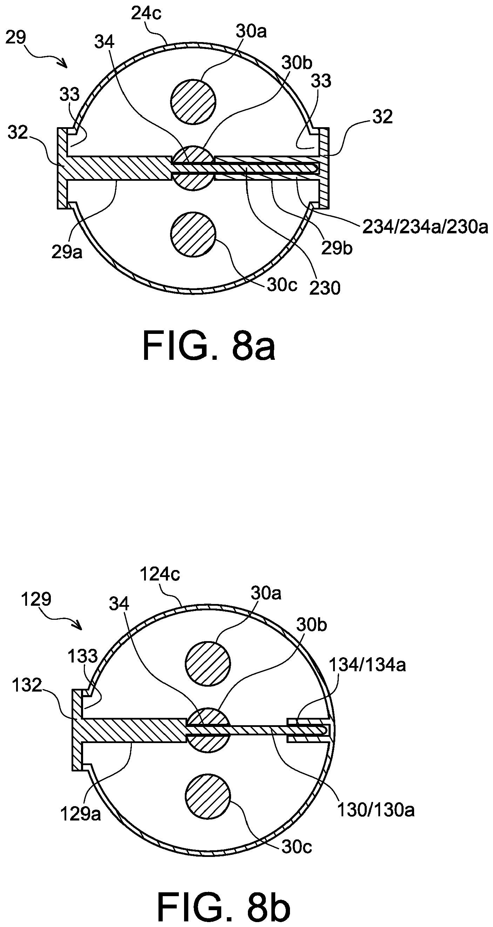

Puis, on introduit la douille 29b dans l'alésage 34 par une ouverture 33. Une portion d'extrémité 230 de la fiche 29a est introduite dans un logement 234 que comporte la douille 29b par l'ouverture 33 opposée. La fiche 29a et la douille 29b sont alors serrées par vissage aux ouvertures 33 (par exemple dans chaque ouverture ou autour). Les têtes 32 servent de prises pour le vissage. Les têtes 32 viennent en contact au serrage avec la carcasse de l'enveloppe d'espacement 24c (voir figures 4 et 8a).

On peut alternativement visser la fiche 29a sur la douille 29b plutôt que de les visser chacune autour des ouvertures 33. Plus précisément, la portion d'extrémité 230 de la fiche 29a peut comporter un filetage 230a et le logement 234 de la douille 29b peut comporter un filetage 234a correspondant.

Le stabilisateur 29 bloque alors le conducteur central 30b en translation relativement à l'enveloppe d'espacement 24c. En d'autres termes, le stabilisateur 29 oppose à l'isolant support 25, via le conducteur 30b, une force contraire à la pression interne de l'enveloppe 23e lorsque l'enveloppe d'espacement 24c est à pression ambiante.

La bride 31 maintient ensemble mécaniquement les conducteurs 30a à 30c.

Le stabilisateur 29 et la bride 31, agissant en combinaison, permettent de bloquer en translation l'ensemble des conducteurs vis-à-vis de l'enveloppe 24c.

On note que dans l'enveloppe d'espacement 24a, la pression est réduite à un niveau intermédiaire entre la pression de service (0,7MPa) et la pression atmosphérique (0,1MPa) de sorte qu'aucun isolateur support 25 n'ait à supporter la différence de pression totale.

On a décrit la mise en place dans l'enveloppe d'espacement 24c d'un stabilisateur 29 pour le démontage de 23c. La mise en place d'un tel stabilisateur 29 dans les enveloppes d'espacement 24a, 24b et 24d à 24f pour les enveloppes à sectionneur correspondantes se fait de la même manière.

Le démontage des enveloppes à sectionneurs 23d à 23f se fait ensuite comme pour 23c.

On notera que pour les enveloppes 23a et 23b, un capot d'extrémité 35 est fixé en bout de jeu de barres, au lieu d'une enveloppe d'espacement 24a à 24d pour 23c à 23f, ce capot 35 étant d'une part isolé électriquement du jeu de barres correspondant, d'autre part étanche aux gaz et configuré pour résister en permanence à la pression de service.

Sur chaque enveloppe 23g et 23h, une enveloppe d'extrémité 36 est fixée de façon étanche aux gaz. Un isolateur support 25 sépare chaque enveloppe 23g et 23h de leur enveloppe 36 respective. Du côté opposé à l'isolateur 25, l'enveloppe 36 est obturée par un capot 37 similaire au capot 35. L'enveloppe 36 peut être mise sous pression atmosphérique sans utilisation du stabilisateur 29.

Dans une variante représentée en figure 7, tous les isolants supports 25 restent attachés à l'enveloppe à sectionneur 43c, similaire à 23c, que l'on extrait. Il doit alors être fait usage du stabilisateur 29 sur les deux enveloppes d'espacement adjacentes.

Dans des variantes non représentées, l'un des deux ensembles de couplage se trouve sur l'une des deux enveloppes à sectionneur adjacentes ou les deux ensembles de couplages se trouvent sur les enveloppes adjacentes aux enveloppes d'espacement.

L'utilisation de SF6 comme gaz isolant n'est pas limitative. Dans une variante non représentée, on fait par exemple usage d'un mélange de N2 et SF6.

Dans une variante non représentée, le PSEM véhicule du courant monophasé, les jeux de barres ne comportent que deux conducteurs. Un stabilisateur est alors fixé de la même façon sur l'un des conducteurs et une bride reliant les deux conducteurs est montée à demeure dans les enveloppes d'espacement.

Dans une variante de réalisation visible en figure 8b, une enveloppe d'espacement 124c est munie d'un stabilisateur 129.

L'enveloppe d'espacement 124c est pourvue d'une ouverture 133 et d'un logement 134 disposé, monté ou formé sur la surface interne de sa paroi, en vis-à-vis de l'ouverture 133.

Le stabilisateur 129 comporte une fiche 129a et une tête 132. Le stabilisateur 129 diffère du stabilisateur 29 décrit plus haut en ce qu'il est exempt de douille amovible.

Pour monter le stabilisateur 129 sur l'enveloppe d'espacement 124c, on libère l'ouverture 133, on introduit la fiche 129a dans l'ouverture 133 en engageant son extrémité 130 dans l'alésage 34 puis dans le logement 134. La fiche 129a est alors serrée par vissage à l'ouverture 133 (par exemple dans l'ouverture ou autour). On peut alternativement visser l'extrémité 130 de la fiche 129a dans le logement 134 plutôt qu'autour de l'ouverture 133. L'extrémité 130 comporte alors un filetage 130a et le logement 134 un filetage 134a correspondant.

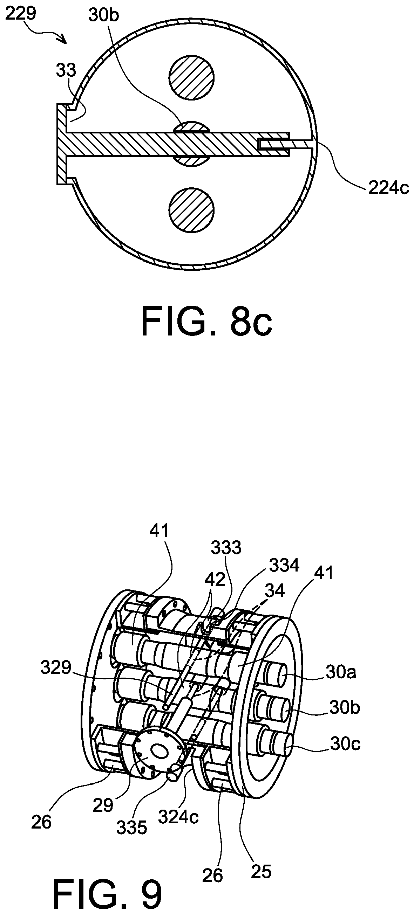

Dans une variante de réalisation visible en figure 8c, une enveloppe d'espacement 224c est munie d'un stabilisateur 229 comportant ici uniquement une fiche. L'enveloppe 224c est munie d'un pion et la fiche 229 d'un logement en son extrémité enveloppant le pion lorsque la fiche 229 est montée sur l'enveloppe 224c. Diverses structures de fixation sont possibles, par exemple par vissage de la fiche 229 sur le pourtour de l'ouverture 33, ou sur le pion 229, des filetages appropriés étant prévus.

Dans un autre mode de réalisation (figure 9), une enveloppe d'espacement 324c est mise en oeuvre. Ses différences avec les enveloppes 24c et 124c sont décrites ci-après. Les éléments similaires portent les mêmes références numériques. L'enveloppe d'espacement 324c est décrite ici dans une position de maintenance, le stabilisateur 29 étant en place.

Ici, chaque barre 42 de conducteur 30a-c disposée dans l'enveloppe 324c comporte un alésage propre 34.

L'enveloppe 324c comporte des ouvertures auxiliaires 333 au-dessus et en-dessous des ouvertures 33 d'insertion du stabilisateur 29. Quatre ouvertures 333 sont prévues ici, une de chaque côté de l'un et l'autre des conducteurs supérieur 30a et inférieur 30c et en vis-à-vis des alésages 34 respectifs.

Deux tiges stabilisatrices 329 sont ici logées dans une ouverture respective 333 et dans l'alésage 34 correspondant de l'un des conducteurs 30a et 30c.

Un bouchon 335 vient obturer l'ouverture 333 opposée à l'ouverture 333 d'insertion des tiges 329, l'extrémité de chaque tige stabilisatrice 329 étant disposée dans le bouchon 335, à l'intérieur de l'enveloppe 324c.

En variante, l'enveloppe 324c ne comporte que deux ouvertures 333 et l'extrémité de chaque tige stabilisatrice 329 est insérée dans un logement correspondant prévu sur la surface interne de la paroi de l'enveloppe 324c.

Un flasque 334 est ici disposé à l'extérieur de l'enveloppe 324c, par exemple contre ou sur l'enveloppe. Les tiges 329 sont serrées contre le flasque 334, par exemple par vissage ou par d'autres moyens. Un serrage des tiges 329 à l'extérieur de l'enveloppe 324c a pour avantage d'éviter la chute de tout copeau à l'intérieur de celle-ci résultant de la mise en oeuvre d'un filetage.

Dans ce mode de réalisation, les tiges 329 et le flasque 334 remplacent avantageusement la bride 31.

Le flasque 334 ou tout autre organe de fixation combinée des trois conducteurs entre eux et/ou par rapport à l'enveloppe 324c peut être prévu à demeure sur ou contre l'enveloppe 324c. Une partie de la paroi de l'enveloppe 324c peut former organe de liaison mécanique ou organe de fixation combinée des trois conducteurs entre eux. Les tiges 329 peuvent elles-mêmes être vissées contre l'enveloppe 324c, sur le pourtour des ouvertures 333, l'enveloppe 324c assurant elle-même la liaison mécanique entre les trois conducteurs 30a-c par l'intermédiaire du stabilisateur 29 et des tiges 329. En variante, le flasque 334 est une pièce amovible, en place lors des opérations de maintenance uniquement. La deuxième enveloppe d'espacement adjacente à l'enveloppe à sectionneur qui subit l'extraction peut être similaire à la structure de l'enveloppe 324c décrite ci-dessus. Des tiges 329 peuvent également y être mises en oeuvre.

## Revendications

1. Stabilisateur amovible pour une enveloppe d'espacement (24a-24f) d'une installation électrique de type PSEM (20), l'enveloppe d'espacement (24a-24f) comportant une première ouverture (33) ainsi qu'un conducteur (30b) pourvu d'un alésage (34), le stabilisateur amovible (29) comprenant une fiche (29a) configurée pour être introduite par la première ouverture (33) dans l'enveloppe d'espacement (24a-24f), la fiche étant destinée à pénétrer dans l'alésage (34) du conducteur (30b) afin de bloquer ledit conducteur (30b) en translation après mise à pression atmosphérique de ladite enveloppe d'espacement (24a-24f).

2. Stabilisateur amovible selon la revendication 1 comprenant une douille (29b) configurée pour être introduite par une deuxième ouverture dans l'enveloppe d'espacement (24a-24f) et pour recevoir une extrémité de la fiche (29a).

3. Stabilisateur amovible selon la revendication précédente la fiche (29a) et la douille (29b) étant configurées pour être vissées respectivement à la première ouverture (33) et à la deuxième ouverture (33), ou bien la fiche (29a) étant configurée pour être vissée sur la douille (29b).

4. Stabilisateur amovible selon la revendication 1, une extrémité de la fiche (29a) étant configurée pour être disposée dans un logement (134) que comporte l'enveloppe d'espacement (24a-24f), le logement étant situé en vis-à-vis de la première ouverture (33), la fiche (29a) étant configurée pour être vissée à la première ouverture (33), ou pour être vissée (134a) dans ledit logement.

5. Enveloppe d'espacement comportant au moins un premier conducteur (30a, 30b, 30c), au moins un stabilisateur amovible (29) selon l'une quelconque des revendications précédentes et au moins une ouverture (33) pour introduire ledit stabilisateur amovible (29), ledit premier conducteur (30a, 30b, 30c) pouvant éventuellement comporter un alésage (34) pour recevoir ledit stabilisateur amovible (29).

6. Enveloppe d'espacement selon la revendication 5, comprenant au moins un deuxième conducteur (30a, 30b, 30c) et un organe de liaison (31 ; 334 ; 24c ; 124c ; 324c) reliant mécaniquement lesdits conducteurs (30a, 30b, 30c) entre eux, le stabilisateur amovible (29) coopérant avec l'organe de liaison (31 ; 334 ; 24c ; 124c ; 324c) pour que tous lesdits conducteurs (30a, 30b, 30c) puissent être bloqués en translation par rapport à l'enveloppe d'espacement (24a-24f) après mise à pression atmosphérique de l'enveloppe d'espacement (24a-24f).

7. Enveloppe d'espacement selon la revendication 6, l'organe de liaison :
- comportant des moyens externes (334) à l'enveloppe d'espacement (324c) ou une partie de la paroi de l'enveloppe d'espacement (324c) elle-même, l'enveloppe d'espacement comportant au moins une ouverture auxiliaire, une tige stabilisatrice (329) étant logée dans l'ouverture auxiliaire et dans un alésage (34) que comporte le deuxième conducteur ;
- ou bien l'organe de liaison étant une bride (31) rivetée à chacun des conducteurs (30a-30c), dans l'enveloppe d'espacement.

8. Procédé d'extraction d'une enveloppe à sectionneur (23a-23f) d'une travée (27a-27c) d'une installation électrique de type PSEM (20), ladite travée (27a-27c) présentant une enveloppe à disjoncteur (22a-22c) reliant l'installation électrique (20) à un réseau de distribution, la travée présentant encore une première enveloppe d'espacement (24a-24f) adjacente à l'enveloppe à sectionneur (23a-23f), l'installation électrique (20) comportant un jeu de barres (21a, 21b), l'enveloppe à sectionneur (23a-23f) et l'enveloppe d'espacement (24a-24f) étant chacune traversée par une portion respective du jeu de barres (21a, 21b), avec l'enveloppe à sectionneur (23a-23f), l'enveloppe à disjoncteur (22a-22c) et l'enveloppe d'espacement (24a-24f) formant, lorsqu'elles sont remplies de gaz isolant à une pression de service déterminée, chacune une unité sous pression indépendante, la méthode comportant les étapes suivantes :
- mise à la terre de ladite travée (27a-27c) et dudit jeu de barres (21a, 21b),
- remplacement du gaz isolant à la pression de service dans l'enveloppe à disjoncteur (22a-22c), ladite enveloppe à sectionneur (23a-23f) et ladite première enveloppe d'espacement (24a-24f) par de l'air à pression atmosphérique,
- mise en place, dans la première enveloppe d'espacement (24a-24f), d'un stabilisateur amovible (29) selon l'une des revendications 1 à 4,
- extraction physique de l'enveloppe à sectionneur (23a-23f) hors du PSEM (20).

9. Procédé d'extraction d'une enveloppe à sectionneur (23a-23f) selon la revendication 8, dans lequel un premier isolant support (25) est disposé entre l'enveloppe à sectionneur (23a-23f) et l'enveloppe à disjoncteur (22a-22c) et un deuxième élément isolant support (25) est disposé entre l'enveloppe à sectionneur (23a-23f) et la première enveloppe d'espacement (24a-24f), ces isolants supports (25) étant maintenus sur l'enveloppe à sectionneur (23a-23f) après extraction.

10. Procédé d'extraction d'une enveloppe à sectionneur (23c-23f) selon la revendication 8 ou 9, dans laquelle l'installation électrique comporte une deuxième enveloppe d'espacement (24a-24d) adjacente à ladite enveloppe à sectionneur (23c-23f), comportant une étape d'abaissement de la pression interne de la deuxième enveloppe d'espacement (24a-24d) à un niveau de pression inférieur à la pression de service, l'étape d'abaissement intervenant avant l'extraction physique de l'enveloppe à sectionneur (23c-23f) mais après la mise à la terre dudit jeu de barres.

11. Procédé d'extraction d'une enveloppe à sectionneur (23c-23f) selon la revendication précédente dans laquelle l'enveloppe à sectionneur (23c-23f) est séparée de la deuxième enveloppe d'espacement (24a-24d) par un troisième isolant support (25).

12. Procédé d'extraction d'une enveloppe à sectionneur (23c-23f) selon la revendication précédente dans laquelle le troisième isolant support (25) reste attaché à la deuxième enveloppe d'espacement (24a-24d) après extraction physique de l'enveloppe à sectionneur (23c-23f) hors du PSEM.

13. Procédé d'extraction d'une enveloppe à sectionneur (23c-23f) selon la revendication précédente dans laquelle la pression interne de la deuxième enveloppe d'espacement (24a-24d) après abaissement est comprise entre 0,1MPa et 0,5MPa, par exemple est de l'ordre de 0,2MPa.

14. Procédé d'extraction d'une enveloppe à sectionneur (23c-23f) selon la revendication 11 dans laquelle la pression interne de la deuxième enveloppe d'espacement (24a-24d) après abaissement est la pression atmosphérique et dans laquelle le troisième isolant support (25) reste attaché à l'enveloppe à sectionneur (23c-23f) après son extraction physique, ce procédé pouvant éventuellement comporter une étape de mise en place d'un stabilisateur amovible (29) sur la deuxième enveloppe d'espacement (24a-24d).

15. Procédé d'extraction d'une enveloppe à sectionneur (23c-23f) selon la revendication 11, dans lequel la pression interne de la deuxième enveloppe d'espacement (24a-24d) après abaissement est égale à la pression atmosphérique, comportant une étape de mise en place d'un stabilisateur amovible (29) sur la deuxième enveloppe d'espacement (24a-24d).

## Patentansprüche

1. Abnehmbarer Stabilisator für eine Abstandskapselung (24a - 24f) einer elektrischen Anlage vom Typ gasisolierte Schaltanlage (20), wobei die Abstandskapselung (24a - 24f) eine erste Öffnung (33) sowie einen Leiter (30b) aufweist, der mit einer Bohrung (34) versehen ist, wobei der abnehmbare Stabilisator (29) einen Stecker (29a) aufweist, der dazu ausgelegt ist, über die erste Öffnung (33) in die Abstandskapselung (24a - 24f) eingeführt zu werden, wobei der Stecker dazu bestimmt ist, in die Bohrung (34) des Leiters (30b) einzudringen, um den Leiter (30b) translatorisch zu sichern, nachdem die Abstandskapselung (24a - 24f) dem Atmosphärendruck ausgesetzt wurde.

2. Abnehmbarer Stabilisator nach Anspruch 1, enthaltend eine Hülse (29b), die dazu ausgelegt ist, über eine zweite Öffnung in die Abstandskapselung (24a - 24f) eingeführt zu werden und ein Ende des Steckers (29a) aufzunehmen.

3. Abnehmbarer Stabilisator nach dem vorangehenden Anspruch, wobei der Stecker (29a) und die Hülse (29b) dazu ausgelegt sind, mit der ersten Öffnung (33) bzw. mit der zweiten Öffnung (33) verschraubt zu werden, oder der Stecker (29a) dazu ausgelegt ist, an die Hülse (29b) angeschraubt zu werden.

4. Abnehmbarer Stabilisator nach Anspruch 1, wobei ein Ende des Steckers (29a) dazu ausgelegt ist, in einer Aufnahmeausnehmung (134) angeordnet zu werden, welche die Abstandskapselung (24a - 24f) aufweist, wobei die Aufnahmeausnehmung der ersten Öffnung (33) gegenüberliegt, der Stecker (29a) dazu ausgelegt ist, mit der ersten Öffnung (33) verschraubt zu werden oder um in die Aufnahmeausnehmung eingeschraubt zu werden (134a).

5. Abstandskapselung, enthaltend zumindest einen ersten Leiter (30a, 30b, 30c), zumindest einen abnehmbaren Stabilisator (29) nach einem der vorangehenden Ansprüche und zumindest eine Öffnung (33) zum Einführen des abnehmbaren Stabilisators (209), wobei der erste Leiter (30a, 30b, 30c) gegebenenfalls eine Bohrung (34) zum Aufnehmen des abnehmbaren Stabilisators (29) aufweisen kann.

6. Abstandskapselung nach Anspruch 5, enthaltend zumindest einen zweiten Leiter (30a, 30b, 30c) und ein Verbindungsglied (31; 334; 24c; 124c; 324c), das die Leiter (30a, 30b, 30c) mechanisch miteinander verbindet, wobei der abnehmbare Stabilisator (29) mit dem Verbindungsglied (31; 334; 24c, 124c; 324c) zusammenwirkt, damit sämtliche Leiter (30a, 30b, 30c) gegenüber der Abstandskapselung (24a - 24f) translatorisch gesichert werden können, nachdem die Abstandskapselung (24a - 24f) dem Atmosphärendruck ausgesetzt wurde.

7. Abstandskapselung nach Anspruch 6, wobei das Verbindungsglied enthält:
- außerhalb der Abstandskapselung (324c) liegende Mittel (334) oder einen Teil der Wand der Abstandskapselung (324c) selbst, wobei die Abstandskapselung zumindest eine Nebenöffnung aufweist, wobei ein Stabilisierungsstab (329) in der Nebenöffnung und in einer Bohrung (34), welche der zweite Leiter aufweist, aufgenommen ist;
- oder das Verbindungsglied ein Flansch (31) ist, der an jedem der Leiter (30a - 30c) in der Abstandskapselung angenietet ist.

8. Verfahren zum Entfernen einer Trennerkapselung (23a - 23f) von einem Schaltfeld (27a - 27c) einer elektrischen Anlage vom Typ gasisolierte Schaltanlage (20), wobei das Schaltfeld (27a - 27c) eine Schalterkapselung (22a - 22c) aufweist, die die elektrische Anlage (20) mit einem Verteilernetz verbindet, wobei das Schaltfeld weiterhin eine erste Abstandskapselung (24a - 24f) aufweist, die an die Trennerkapselung (23a - 23f) angrenzt, wobei die elektrische Anlage (20) einen Satz von Sammelschienen (21 a, 21 b) aufweist, wobei die Trennerkapselung (23a - 23f) und die Abstandskapselung (24a - 24f) jeweils von einem jeweiligen Abschnitt des Sammelschienensatzes (21 a, 21 b) durchsetzt werden, wobei die Trennerkapselung (23a - 23f), die Schalterkapselung (22a - 22c) und die Abstandskapselung (24a - 24f) dann, wenn sie mit Isoliergas unter einem bestimmten Betriebsdruck gefüllt sind, jeweils eine eigenständige Druckeinheit bilden, wobei das Verfahren folgende Schritte umfasst:
- Erden des Schaltfelds (27a - 27c) und des Sammelschienensatzes (21 a, 21 b),
- Ersetzen des Isoliergases unter Betriebsdruck in der Schalterkaspelung (22a - 22c), der Trennerkapselung (23a - 23f) und der ersten Abstandskapslung (24a - 24f) durch Luft unter Atmosphärendruck,
- Einsetzen eines abnehmbaren Stabilisators (29) nach einem der Ansprüche 1 bis 4 in die erste Abstandskapselung (24a - 24f),
- physisches Entfernen der Trennerkapselung (23a - 23f) aus der gasisolierten Schaltanlage (20).

9. Verfahren zum Entfernen einer Trennerkapselung (23a - 23f) nach Anspruch 8, wobei ein erster Stützisolator (25) zwischen der Trennerkapselung (23a - 23f) und der Schalterkapselung (22a - 22c) angeordnet ist und ein zweites Stützisolatorelement (25) zwischen der Trennerkapselung (23a - 23f) und der ersten Abstandskapselung (24a - 24f) angeordnet ist, wobei diese Stützisolatoren (25) nach dem Entfernen an der Trennerkapselung (23a - 23f) gehalten werden.

10. Verfahren zum Entfernen einer Trennerkapselung (23c - 23f) nach Anspruch 8 oder 9, wobei die elektrische Anlage eine zweite Abstandskapselung (24a - 24d) aufweist, die an die Trennerkapselung (23c - 23f) angrenzt, umfassend einen Schritt zum Vermindern des Innendrucks der zweiten Abstandskapslung (24a - 24d) auf ein Druckniveau unter dem Betriebsdruck, wobei der Schritt der Druckverminderung vor dem physischen Entfernen der Trennerkapselung (23c - 23f), jedoch nach dem Erden des Sammelschienensatzes erfolgt.

11. Verfahren zum Entfernen einer Trennerkapselung (23c - 23f) nach dem vorangehenden Anspruch, wobei die Trennerkapselung (23c - 23f) von der zweiten Abstandskapslung (24a - 24d) über einen dritten Stützisolator (25) getrennt wird.

12. Verfahren zum Entfernen einer Trennerkapselung (23c - 23f) nach dem vorangehenden Anspruch, wobei der dritte Stützisolator (25) nach der physischen Entfernung der Trennerkapselung (23c - 23f) aus der gasisolierten Schaltanlage mit der zweiten Abstandskapselung (24a - 24d) verbunden bleibt.

13. Verfahren zum Entfernen einer Trennerkapselung (23c - 23f) nach dem vorangehenden Anspruch, wobei der Innendruck der zweiten Abstandskapselung (24a - 24d) nach der Druckverminderung zwischen 0,1 MPa und 0,5 MPa, beispielsweise in der Größenordnung von 0,2 MPa, liegt.

14. Verfahren zum Entfernen einer Trennerkapselung (23c - 23f) nach Anspruch 11, wobei der Innendruck der zweiten Abstandskapselung (24a - 24d) nach der Druckverminderung der Atmosphärendruck ist und wobei der dritte Stützisolator (25) mit der Trennerkapselung (23c - 23f) nach deren physischer Entfernung verbunden bleibt, wobei dieses Verfahren gegebenenfalls einen Schritt des Anordnens eines abnehmbaren Stabilisators (29) an die zweite Abstandskapselung (24a - 24d) umfassen kann.

15. Verfahren zum Entfernen einer Trennerkapselung (23c - 23f) nach Anspruch 11, wobei der Innendruck der zweiten Abstandskapselung (24a - 24d) nach der Druckverminderung gleich dem Atmosphärendruck ist, umfassend einen Schritt des Anordnens eines abnehmbaren Stabilisators (29) an die zweite Abstandskapselung (24a - 24d).

## Claims

1. A removable stabilizer for a spacer casing (24a-24f) of an electrical installation of the GIS type (20), the spacer casing (24a-24f) comprising a first opening (33) and a conductor (30b) provided with a bore (34), the removable stabilizer (29) comprising a plug (29a) configured to be introduced via the first opening (33) into the spacer casing (24a-24f), the plug being designed to penetrate into the bore (34) of the conductor (30b) so as to block said conductor (30b) against moving in translation after said spacer casing (24a-24f) has been put to atmospheric pressure.

2. A removable stabilizer according to claim 1, comprising a socket (29b) configured to be inserted via a second opening into the spacer casing (24a-24f) and to receive an end of the plug (29a).

3. A removable stabilizer according to the preceding claim, the plug (29a) and the socket (29b) being configured to be screw-fastened respectively to the first opening (33) and to the second opening (33) or the plug (29a) being configured to be screw-fastened on the socket (29b).

4. A removable stabilizer according to claim 1, one end of the plug (29a) being configured to be placed in a housing (134) included in the spacer casing (24a-24f), the housing being situated on the side of the casing opposite from the first opening (33), the plug (29a) being configured to be screw-fastened to the first opening (33) or to be screw-fastened in said housing.

5. A spacer casing including at least a first conductor (30a, 30b, 30c), at least one removable stabilizer (29) according to any preceding claim, and at least one opening (33) for inserting said removable stabilizer (29), said first conductor (30a, 30b, 30c) possibly including a bore (34) for receiving said removable stabilizer (29).

6. A spacer casing according to claim 5, including at least a second conductor (30a, 30b, 30c) and a connection member (31; 334; 24c; 124c; 324c) mechanically connecting said conductors (30a, 30b, 30c) together, the removable stabilizer (29) co-operating with the connection member (31; 334; 24c; 124c; 324c) so that all of said conductors (30a, 30b, 30c) can be blocked against moving in translation relative to the spacer casing (24a-24f) after said spacer casing (24a-24f) has been put to atmospheric pressure.

7. A spacer casing according to claim 6, the connection member:
- including external means (334) outside the spacer casing (324c) or a portion of the wall of the spacer casing (324c) itself, the spacer casing including at least one auxiliary opening, a stabilizing rod (329) being housed in the auxiliary opening and in a bore (34) in the second conductor;
- or the connection member being a strap (31) riveted to each of the conductors (30a-30c), in the spacer casing.

8. A method of extracting a disconnector casing (23a-23f) from a bay (27a-27c) of an electrical installation of the GIS type (20), said bay (27a-27c) presenting a circuit breaker casing (22a-22c) connecting the electrical installation (20) to a distribution network, the bay further presenting a first spacer casing (24a-24f) that is adjacent to the disconnector casing (23a-23f), the electrical installation (20) comprising a set of busbars (21a, 21b), the disconnector casing (23a-23f) and the spacer casing (24a-24f) each having a respective portion of the set of busbars (21a, 21b) passing therethrough, with the disconnector casing (23a-23f), the circuit breaker casing (22a-22c) and the spacer casing (24a-24f) each forming, when they are filled with insulating gas at a determined service pressure, an independent unit under pressure, the method comprising the following steps:
· grounding said bay (27a-27c) and said set of busbars (21a, 21b);
· replacing the insulating gas at service pressure in the circuit breaker casing (22a-22c), said disconnector casing (23a-23f), and said first spacer casing (24a-24f) with air at atmospheric pressure;
· fitting, in the first spacer casing (24a-24f), a removable stabilizer (29) according to any one of claims 1 to 4; and
· physical extraction of the disconnector casing (23a-23f) from the GIS (20).

9. A method of extracting a disconnector casing (23a-23f) according to claim 8, wherein a first supporting insulator (25) is placed between the disconnector casing (23a-23f) and the circuit breaker casing (22a-22c) and a second supporting insulator element (25) is placed between the disconnector casing (23a-23f) and the first spacer casing (24a-24f), these supporting insulators (25) being held on the disconnector casing (23a-23f) after extraction.

10. A method of extracting a disconnector casing (23c-23f) according to claim 8 or claim 9, wherein the electrical installation comprises a second spacer casing (24a-24d) adjacent to said disconnector casing (23c-23f), comprising a step of lowering the internal pressure of the second spacer casing (24a-24d) to a pressure level that is less than the service pressure, the lowering step taking place before the physical extraction of the disconnector casing (23c-23f) but after grounding of said set of busbars.

11. A method of extracting a disconnector casing (23c -23f) according to the preceding claim, wherein the disconnector casing (23c-23f) is separated from the second spacer casing (24a-24d) by a third supporting insulator (25).

12. A method of extracting a disconnector casing (23c -23f) according to the preceding claim, wherein the third supporting insulator (25) remains attached to the second spacer casing (24a-24d) after physical extraction of the disconnector casing (23c-23f) from the GIS.

13. A method of extracting a disconnector casing (23c -23f) according to the preceding claim, wherein the internal pressure of the second spacer casing (24a-24d) after lowering lies in the range 0.1 MPa to 0.5 MPa, for example is of the order 0.2 MPa.

14. A method of extracting a disconnector casing (23c -23f) according to claim 11, wherein the internal pressure of the second spacer casing (24a-24d) after lowering is atmospheric pressure and wherein the supporting insulator (25) remains attached to the disconnector casing (23c-23f) after physical extraction, said method possibly comprising a step of fitting a removable stabilizer (29) on the second spacer casing (24a-24d).

15. A method of extracting a disconnector casing (23c -23f) according to claim 11, wherein the internal pressure of the second spacer casing (24a-24d) after lowering is equal to atmospheric pressure, comprising a step of fitting a removable stabilizer (29) on the second spacer casing (24a-24d).
